Europäisches Patentamt

European Patent Office

Office européen des brevets

(11) Publication number: **0 136 138 B1**

# EUROPEAN PATENT SPECIFICATION

(45) Date of publication of patent specification: **13.03.91**  (51) Int. Cl.⁵: **H02G 9/06, H02G 9/10**

(21) Application number: **84306291.0**

(22) Date of filing: **14.09.84**

(54) **Duct seal for pressurisable duct.**

(30) Priority: **16.09.83 GB 8324848**

(43) Date of publication of application:
**03.04.85 Bulletin 85/14**

(45) Publication of the grant of the patent:
**13.03.91 Bulletin 91/11**

(84) Designated Contracting States:
**AT BE CH DE FR GB IT LI NL SE**

(56) References cited:
**DE-A- 1 941 166**
**DE-A- 2 005 307**
**FR-A- 2 369 912**
**FR-A- 2 373 903**

(73) Proprietor: **N.V. RAYCHEM S.A.**
**Diestsesteenweg 692**
**B-3200 Kessel-lo(BE)**

(72) Inventor: **Selleslags, Frank**
**Keiberg 52**
**B-3044 Oud-Heverlee(BE)**
Inventor: **Wensing, Lucas**
**Vuikelaan 1**
**B-3060 Bertem(BE)**

(74) Representative: **Benson, John Everett et al**
**Raychem Limited Intellectual Property Law**
**Department Faraday Road Dorcan**
**Swindon, Wiltshire SN3 5HH(GB)**

## Description

The present invention relates to a pressure retaining article for sealing a cable comprising a duct seal for sealing a cable, particulary a fibre optic cable, to a duct and a method of sealing a cable.

Although cables may be buried directly in the ground, it is usual to lay them in ducts in order to provide protection against moisture and mechanical damage and to allow their replacement without extensive excavation work. The length of a duct usually corresponds to a convenient length of cable between splices, typically about 500 metres. This length will be determined by cable manufacture, transport or installation requirements. A duct will run between two man holes or hand holes within which the cable will be spliced. If the protection afforded by the duct is to be ensured it will be necessary to seal the cable to the duct at its point of entry into the duct. Ducts may also be used above ground, where the same principles in general apply.

One type of duct seal is a tubular device where one end surrounds and seals to the outer surface of an end of the duct and the other end is sealed around the cable. This type of duct seal is used where an end of the duct protrudes from the wall of the man hole.

The seals between the ends of the tubular duct seal and the duct and cable can be readily effected if the duct seal is made of a recoverable plastics material. The duct seal is then simply slid along the cable such that it extends a short distance over the end of the duct, and one end is recovered into engagement with the duct and the other end with the cable. Since the duct will in general be considerably larger in diameter than the cable it carries, it is usual for the seal in its recoverable configuration to comprise a first cylindrical portion of larger diameter connected by a transition portion to a second cylindrical portion of smaller diameter. The seal can be supplied with its smaller end blanked-off in order that unused ducts may be sealed; when the duct is ready for use, the blanked-off end is cut away, the cable inserted and the smaller end recovered into engagement with the cable. The seals to the cable and to the duct may be enhanced by an adhesive which is provided as an internal coating on each end of the duct seal.

In general, a recoverable article is an article the dimensional configuration of which may be made substantially to change when subjected to appropriate treatment. Usually these articles recover towards an original shape from which they have previously been deformed but the term, as used herein, also includes an article which adopts a new configuration, even if it has not been previously deformed.

In their most common form, such articles comprise a heat-shrinkable sleeve made from a polymeric material exhibiting the property of elastic or plastic memory as described, for example, in U.S.Patents 2,027,962; 3,086,242 and 3,597,372. As it is clear in, for example, U.S. Patent 2,027,962, the dimensionally heat-stable form may be a transient form in a continuous process in which, for example, an extruded tube is expanded, whilst hot, to a dimensionally heat-unstable form but, in other applications, a preformed dimensionally heat-stable article is deformed to a dimensionally heat-unstable form in a separate stage.

In the production of heat-recoverable articles, the polymeric material may be cross-linked at any stage in the production of the article that will enhance the desired dimensional recoverability. One manner of producing a heat-recoverable article comprises shaping the polymeric material into the desired heat-unstable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as an inner tubular member, which, upon heating weakens and thus allows the elastomeric member to recover.

Such articles have found wide application in the production of duct seals, and offer excellent protection against water, dirt and insect penetration between the cable and the duct. They are well able to resist such agencies and the small mechanical stresses that are caused by temperature variation, earth movements and repair work on cable splices.

where protection against moisture is particularly important, it is known to apply an air pressure within the cable. This air pressure resists ingress of water, and by its reduction, can provide a warning when the integrity of the cable jacket or of a splice case fails.

What we propose is to pressurise the duct rather than the cable. We have found that this offers high protection against moisture ingress whilst allowing a greater freedom of design of the cables and cable splices. This is particularly beneficial for fibre-optic cables which in general are not pressurisable. A problem however arises in the design of duct seals, since previously available seals are unable to retain pressure under the testing conditions regarded as applicable. The seal between the duct seal and the cable or duct is put into peel which reduces its life-time considerably.

We have discovered that this cannot satisfactorily be overcome by the use of high performance adhesives for two reasons. Firstly, such adhesives of the heat-activatable variety require temperatures which would damage many types of cables, and secondly the bond produced is rigid and unable to accommodate movement between the duct and the cable. It is desirable, for example, that the cable jacket be able to move a significant distance axially with respect to the duct, in order that damage to the cable be avoided if the duct is accidentally pulled during excavation. We have overcome this problem by combining pressure resistance in a duct seal with what seems to be a conflicting requirement of a weak bond.

Thus, the present invention provides an article for sealing a cable to a housing through which the cable passes, which comprises:

(a) a first hollow portion which can be turned inside-out to engage the housing carrying a cable;

(b) a second hollow portion of smaller cross-sectional size than the first portion and which can be heat-shrunk into engagement with the cable, the open end of the second portion through which the cable passes facing the housing such that pressure within the housing tends to increase engagement between the second portion and the cable; characterized in that the article comprises a duct seal for sealing the cable to a pressurizable duct, and has:

(c) means which allows relative axial movement between the cable and the duct said means comprising a sealing material on the second portion which provides a seal between the second portion and the cable, said sealing material having a shear strength such that the pull-out strength of the cable is from 2-10 kg at ambient temperatures; and

(d) a sealing material on an external surface of the first portion.

The invention also provides a method of sealing a cable to a duct by means of a pressure resistant duct seal according to the invention having a first hollow portion which can engage the duct, a second hollow portion which can be shrunk into engagement with the cable, and means which allows relative axial movement between the cable and the duct, which method comprises:

(a) positioning the duct seal around the cable with the open end of the second portion through which the cable passes facing the duct;

(b) heat-shrinking the second portion into engagement with the cable;

(c) turning the first portion inside out to engage the duct and

(d) engaging the first portion with the duct.

The means which allows relative axial movement between the cable and the duct comprises a sealing material on the second portion which provides a seal between the second portion and the cable, the sealing material having a shear strength at ambient temperature to give a pull-out strength of 2-10 kg, preferably of 7 kg or less, more preferably 5kg or less. In this way a good environmental seal is formed which allows the cable substantially unlimited axial movement. A mastic is a preferred sealing material. A mastic is an adherent cohesive sealing material which can deform or yield plastically, that is, undergo viscous flow, both during application (where necessary) and during subsequent service at ambient temperatures. Mastics may consist of substantially non-crystalline materials, for example bituminous materials, elastomers, or thermoplastic polymers, and may contain inert powdered or fibrous fillers. We prefer that the viscosity of the mastic is not greater than $10^{13}$, preferably not greater than $10^{12}$ more preferably not greater than $10^{11}$, centipoise at 25°C.

Another means which may allow relative movement comprises a particular configuration of the duct seal, preferably of a flexible transition portion between the first and second portions, which can flex to allow movement of the first portion relative to the second portion. Flexibility of this transition portion, or other portion, of the duct seal is desirable not only for allowing some relative movement of duct and cable, but also to allow the first portion to be turned inside-out during installation. It is this turning inside-out which allows the second portion to take on a reentrant configuration with respect to the duct whilst allowing the first portion to fit externally over the duct. The material and wall thickness of the transition portion should be chosen such that this turning inside-out can be performed easily by hand.

The first portion is preferably recoverable, such that it can be recovered into engagement with the duct. Recovery of the second portion, or both portions as the case may be, is preferably by heat-shrinkage. Furthermore, the first portion is preferably provided with a sealing material to enhance the seal made to the duct. The sealing material is preferably an adhesive, particularly a heat-activatable adhesive, preferably a hot-melt adhesive such as a polyamide. In this preferred case, the single step of heating may cause activation of the adhesive and recovery of the first portion into engagement with the duct. The recovery temperatures of the first and second portions are preferably less than 100°C, more preferably are about 80°C.

The adhesive used to bond the first portion to the duct preferably has an activation temperature of 130°C or less, more preferably from 70-95°C, and preferably has a peel strength of at least 5 Kg per 25 mm, more preferably about 10 Kg per 25mm, at ambient temperature. A high peel strength is desirable in order to resist peel caused by the pressure within the duct since in general the first portion will be shrunk around the outside of the duct and therefore subjected to peel forces in a way that the second portion is not. It is to be noted that the advantages of a low shear adhesive of low activation temperature which are desirable at the second portion do not apply to the first portion. This is because no relative movement need occur at the duct, and the duct can withstand the high temperatures required for activation of many high performance adhesives.

In order that the duct be pressurised or that pressure be monitored at various points along the duct, the duct is preferably provided with a pressure access point such as a valve, particularly a one-way valve. Instead of the duct being provided with such a pressure access point, it could be provided in the duct seal, preferably in a non-recoverable portion thereof.

A further feature that may be provided, and which will be of benefit if the cable is likely to be subjected to large axial forces, is means for resisting the second portion turning inside-out on axial movement of the cable relative to the duct in a direction out of the duct. It is thus preferred that relative movement between the duct and the cable occurs by the cable sliding through the second portion; hence the preferred sealing material of low shear strength mentioned above. An alternative where the second portion remains fixed to the cable and movement is accommodated by the second portion peeling away from the cable is not preferred, although small relative movements may be accommodated in this way. Means for resisting or preventing this type of movement (which would ultimately result in the second portion turning inside-out) may comprise lugs or rings on the duct seal on or adjacent the second portion which abut the cable preventing the material of the duct seal turning in on itself as the cable moves axially.

The invention is now further illustrated by way of example by the accompanying drawings, in which:

Figure 1 shows a duct layout;

Figure 2 shows a prior art duct seal;

Figure 3 shows a duct seal of the invention before installation;

Figures 4 and 5 show an installation sequence; and

Figure 6 shows an alternative duct seal according the invention.

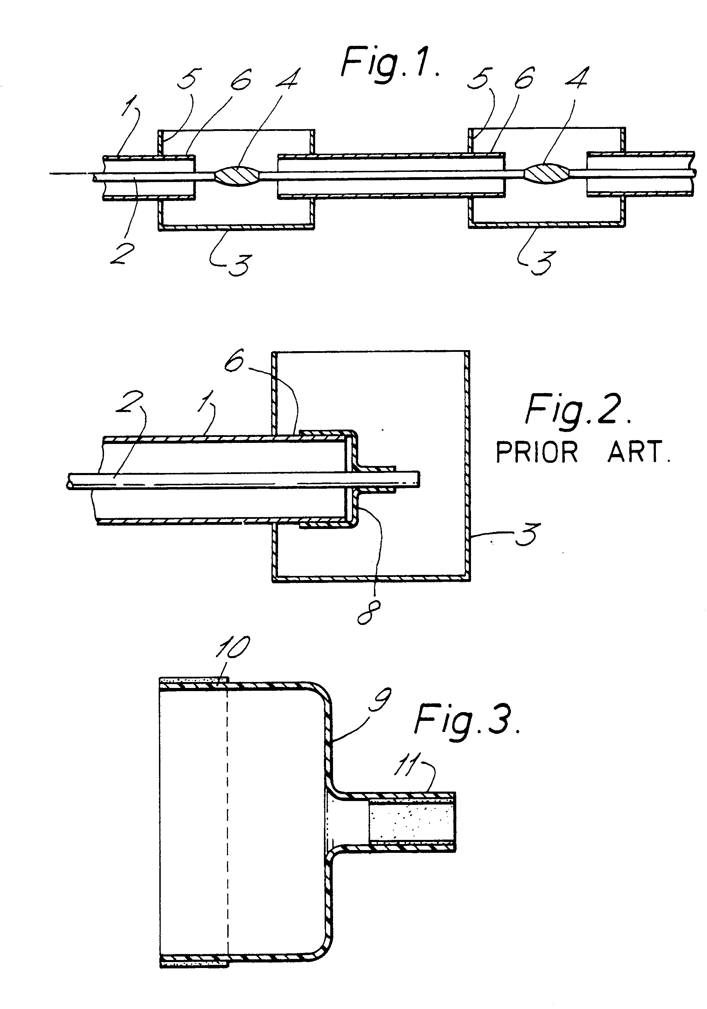

In Figure 1, a duct 1 carries a cable 2 between hand holes 3. The cable 2 is spliced in each hand hole. In the hand holes the duct is shown protruding from the wall 5, a short distance 6.

In Figure 2 a prior art duct seal 8 is bonded to the duct 1 where it protrudes at 6 and to the cable 2. In this design one can see that an excess pressure within the duct would cause a seal between the duct seal and the cable to be put in peel. If the seal were produced by a high performance adhesive to reduce peel, there would be no flexibility between the duct and the cable.

A duct seal 9 is shown in Figures 3-6. In Figure 3 the seal 9 has a first hollow portion 10 which can engage the duct, and a second hollow portion 11 which can be recovered into engagement with the cable. The transition portion is sufficiently flexible to allow the first portion to be turned inside-out.

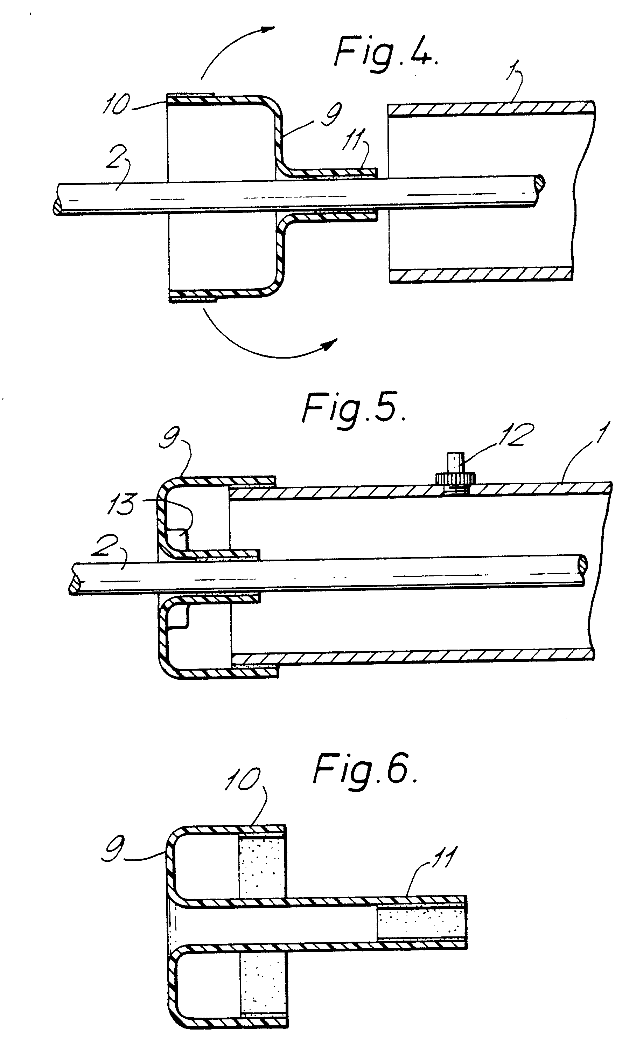

The second portion 11 has an open end (it may be supplied closed and opened by severing etc in the field) through which the cable passes, and is installed with the open end facing the duct 1 as shown in Figure 4. The re-entrant configuration that results causes pressure within the duct to tend to increase engagement between the second portion 10 and the cable. The second portion 11 is internally coated with a mastic which has a low shear strength and thus allows relative axial movement between the cable and the duct. The first portion 10 is externally coated with a hot-melt adhesive of high peel strength, such as polyamide.

In the installation sequence shown in Figures 4 and 5 the first portion is turned inside-out so that the originally external coating of hot-melt adhesive is able to bond to the duct. This allows the second portion 11 to be recovered into engagement with the cable without recovery or damage to occur to the first portion.

The step of turning inside-out can be avoided, for example, by providing an extended second portion 11 as shown in Figure 6.

Other features shown are a pressure access point 12 in the duct 1 of Figure 5, and lugs 13 on the duct seal of Figure 6 which resist the second portion 11 turning inside-out as the cable is withdrawn to the left as drawn.

EXAMPLE

A duct seal having an original configuration as shown in Figure 3 was installed by the procedure illustrated in Figures 4 and 5.

The seal was made from a polyolefin by moulding, cross-linking, heating, expanding and cooling to render the first and second portions heat-shrinkable. The recovery temperature was about 80°C, and the recovery ratio (reckoned as the recoverable dimension divided by the fully recovered dimension) of the first portion was 1.3:1, and that of the second portion was 2.8:1. In general recovery rations of from 2:1 to 1.2:1 for the first portion and from 2:1 to 5:1 for the second portion are preferred.

The duct was made of PVC and the cable was a fibre optic cable having a polyethylene jacket. The diameter of the duct was 32cm and that of the cable was 10cm.

The first portion 10 was coated with a polyamide based adhesive having a softening temperature of about 80°C and a peel strength of about 10 Kg per 25 mm at 25°C, and the second portion was coated with a mastic based on a stablized butyl composition. The mastic was prepared in a solvent and applied by brushing.

The installed duct seal was subjected to the following cycle at an internal pressure of 100 KPa:

a. -40°C 4 hours
b. Temperature change over 2 hours
c. +60°C 4 hours

Samples passed at least 10 cycles with no leaks.

Axial movement between the cable and the duct was tested at room temperature using an Instron Tensile Tester 1-15 at a pull rate of 10mm/minute. Pull-out forces of averaging 4.6 Kg were recorded.

## Claims

1. An article for sealing a cable to a housing (1) through which the cable passes which comprises:

(a) a first hollow portion (10) which can be turned inside-out to engage the housing (1) carrying a cable;

(b) a second hollow portion (11) of smaller cross-sectional size than the first portion (10) and which can be heat-shrunk into engagement with the cable (2), the open end of the second portion through which the cable (2) passes facing the housing (1) such that pressure within the housing (1) tends to increase engagement between the second portion (11) and the cable (2); characterized in that the article comprises a duct seal (9) for sealing the cable (2) to a pressurizable duct (1) and has:

(c) means which allows relative axial movement between the cable (2) and the duct (1); said means comprising a sealing material on the second portion (11) which provides a seal between the second portion (11) and the cable (2), said sealing material having a shear strength such that the pull-out strength of the cable (2) is from 2-10 kg at ambient temperature; and

(d) a sealing material on an external surface of the first portion (10).

2. An article (9) according to claim 1, in which said shear strength is such that said pull-out strength is from 2-7 kg. at ambient temperature.

3. An article (9) according to claim 1 or 2, in which the sealing material on the second portion (11) comprises a mastic.

4. An article (9) according to claim 1, in which the first portion (10) is heat-shrinkable and the first and second portions (10,11) have a shrinkable temperature of 100°C or less.

5. An article (9) according to any preceding claim, in which the first portion (10) has an adhesive coating for bonding the first portion to the duct (1).

6. An article (9) according to claim 5, in which the adhesive has a peel strength of at least 5 Kg per 2.5cm at ambient temperature.

7. An article (9) according to claim 5, in which the adhesive is a hot-melt adhesive and in which the first portion is heat-shrinkable.

8. An article (9) according to any preceding claim which comprises a substantially tubular article, one open end portion of which comprises said first portion (10) and the other open end portion of which comprises said second portion (11), an intermediate portion of the article being flexible thus allowing the first portion to be turned inside-out.

9. An article (9) according to claim 8, in which the first portion has an external coating of an adhesive and the second portion has an internal coating of a sealing material of low shear strength.

10. An article (9) according to any preceding claim, which additionally comprises means for resisting the second portion turning inside-out on axial movement of the cable relative to the duct in a direction out of the duct.

11. An article (9) comprising a duct, a cable and a duct seal according to any preceding claim, the cable being sealed to the duct by means of the duct seal.

**12.** An article (9) according to claim 11 in which the duct seal carries a pressure access point.

**13.** An article (9) according to claim 12, in which the pressure access point is a valve (12).

**14.** An article (9) according to claim 13 in which the cable is a fibre optic cable.

**15.** A method of sealing a cable (2) to a duct (1) by means of a pressure resistant duct seal (9) according to claim 1 having a first hollow portion (10) which can engage the duct (1), a second hollow portion (11) which can be shrunk into engagement with the cable (2), and means which allows relative axial movement between the cable (2) and the duct (1), which method comprises:

> (a) positioning the duct seal (9) around the cable (2) with the open end of the second portion (11) through which the cable (2) passes facing the duct (1);
> (b) heat-shrinking the second portion (11) into engagement with the cable (2);
> (c) turning the first portion (10) inside-out to engage the duct (1) and
> (d) engaging the first portion (10) with the duct (1).

**16.** A method according to claim 15, in which the duct seal (9) is a substantially tubular article, one open end portion of which comprises said first portion (10) and the other open end portion of which comprises said second portion (11), an intermediate portion of the article being flexible, the method additionally comprising turning the first portion (10) inside-out to allow it to engage the duct.

**17.** A method according to claim 15, in which the first portion (10) carries a hot-melt adhesive for bonding the first portion to the duct (1) step (c) also causing activation of the hot-melt adhesive.

**Revendications**

**1.** Article destiné à assurer l'étanchéité entre un câble et un boîtier (1) à travers lequel passe le câble, qui comprend :

> (a) une première partie creuse (10) qui peut être retournée pour venir en prise avec le boîtier (1) pour assurer l'étanchéité d'un câble ;
> (b) une seconde partie creuse (11) de plus petites dimensions en section transversale que la première partie (10) et qui peut être thermorétractée en prise avec le câble (2), l'extrémité ouverte de la seconde partie à travers laquelle passe le câble (2) étant orientée vers le boîtier (1) de sorte que la pression à l'intérieur du boîtier (1) tende à accroître la prise entre la seconde partie (11) et le câble (2) ; caractérisé en ce qu'il comprend un dispositif d'étanchéité de conduit (9) pour assurer l'étanchéité entre le câble (2) et un conduit pressurisable (1) et possède :
> (c) des moyens qui permettent un mouvement axial relatif entre le câble (2) et le conduit (1) ; lesdits moyens consistant en une matière d'étanchéité sur la seconde partie (11) qui forme un joint d'étanchéité entre la seconde partie (11) et le câble (2), ladite matière d'étanchéité ayant une résistance au cisaillement telle que la résistance à l'arrachement du câble (2) soit comprise dans l'intervalle de 2 à 10 kg à température ambiante ; et
> (d) une matière d'étanchéité sur une surface extérieure de la première partie (10).

**2.** Article (9) suivant la revendication 1, dans lequel la résistance au cisaillement est telle que la résistance à l'arrachement est comprise dans l'intervalle de 2 à 7 kg à température ambiante.

**3.** Article (9) suivant la revendication 1 ou 2, dans lequel la matière d'étanchéité de la seconde partie (11) consiste en un mastic.

**4.** Article (9) suivant la revendication 1, dans lequel la première partie (10) est thermorétractable et les première et seconde parties (10, 11) possèdent une température de rétraction égale ou inférieure à 100° C.

**5.** Article (9) suivant l'une quelconque des revendications précédentes, dans lequel la première partie (10) porte un revêtement adhésif pour la liaison de la première partie au conduit (1).

**6.** Article (9) suivant la revendication 5, dans lequel l'adhésif possède une résistance à l'arrachement d'au moins 5 kg pour 2,5 cm à température ambiante.

**7.** Article (9) suivant la revendication 5, dans lequel l'adhésif est un adhésif thermofusible et dans lequel la première partie est thermorétractable.

**8.** Article (9) suivant l'une quelconque des revendications précédentes, qui consiste en un article pratiquement tubulaire, dont une partie a extrémité ouverte consiste en la première partie (10) et l'autre partie à extrémité ouverte consiste en la seconde partie (11), une partie intermédiaire de l'article étant flexible, ce qui permet le retournement de la première partie.

9. Article (9) suivant la revendication 8, dans lequel la première partie possède un revêtement extérieur d'un adhésif et la seconde partie possède un revêtement intérieur d'une matière d'étanchéité de faible résistance au cisaillement.

10. Article (9) suivant l'une quelconque des revendications précédentes, qui comprend en outre des moyens pour résister au retournement de la seconde partie par un mouvement axial du câble par rapport au conduit dans le sens opposé au conduit.

11. Article (9) comprenant un conduit, un câble et un dispositif d'étanchéité de conduit suivant l'une quelconque des revendications précédentes, l'étanchéité entre le câble et le conduit étant assurée au moyen du dispositif d'étanchéité de conduit.

12. Article (9) suivant la revendication 11, dans lequel le dispositif d'étanchéité de conduit comprend un point d'accès de pression.

13. Article (9) suivant la revendication 12, dans lequel le point d'accès de pression est une vanne (12).

14. Article (9) suivant la revendication 13, dans lequel le câble est un câble à fibres optiques.

15. Procédé pour assurer l'étanchéité entre un câble (2) et un conduit (1) au moyen d'un dispositif d'étanchéité de conduit (9) résistant à la pression, suivant la revendication 1, comprenant une première partie creuse (10) qui peut venir en prise avec le conduit (1), une seconde partie creuse (11) qui peut être rétractée en prise avec le câble (2), et des moyens qui permettent un mouvement axial relatif entre le câble (2) et le conduit (1), procédé qui consiste :

   (a) à positionner le dispositif d'étanchéité de conduit (9) autour du câble (2) avec l'extrémité ouverte de la seconde partie (11) à travers laquelle passe le câble (2) orientée vers le conduit (1) ;
   (b) à provoquer la thermorétraction de la seconde partie (11) en prise avec le câble (2) ;

   (c) à retourner la première partie (10) pour la mise en prise avec le conduit (1) ; et
   (d) à mettre en prise la première partie (10) avec le conduit (1).

16. Procédé suivant la revendication 15, dans lequel le dispositif d'étanchéité de conduit (9) est un article pratiquement tubulaire, dont une partie à extrémité ouverte consiste en la première partie (10) et l'autre partie à extrémité ouverte consiste en la seconde partie (11), une partie intermédiaire de l'article étant flexible, le procédé consistant en outre à retourner la première partie (10) pour permettre sa mise en prise avec le conduit.

17. Procédé suivant la revendication 15, dans lequel la première partie (10) porte un adhésif thermo-fusible pour la liaison de la première partie au conduit (1), la mise en oeuvre de l'étape (c) provoquant également une activation de l'adhésif thermofusible.

**Ansprüche**

1. Gegenstand zum dichten Verbinden eines Kabels mit einem Gehäuse (1), durch welches das Kabel verläuft, der folgendes aufweist:
   (a) einen ersten hohlen Bereich (10, der von innen nach außen umschlagbar ist, um mit dem ein Kabel tragenden Gehäuse (1) in Eingriff zu kommen;
   (b) einen zweiten hohlen Bereich (11) mit kleineren Querschnittsabmessungen als der erste Bereich (10). der in Eingriff mit dem Kabel (2) wärmeschrumpfbar ist, wobei das offene Ende des zweiten Bereiches, durch den das Kabel (2) verläuft, dem Gehäuse (1) zugewandt ist. so daß der Druck innerhalb des Gehäuses (1) die Tendenz hat, den Eingriff zwischen dem zweiten Bereich (11) und dem Kabel (2) zu verstärken,
   dadurch gekennzeichnet,
   daß der Gegenstand eine Kanaldichtung (9) besitzt, um das Kabel (2) mit einem unter Druck setzbaren Kanal dicht zu verbinden, und folgendes aufweist:
   (c) eine Einrichtung, die eine relative Axialbewegung zwischen dem Kabel (2) und dem Kanal (1) ermöglicht, wobei die Einrichtung auf dem zweiten Bereich (11) ein Dichtungsmaterial besitzt, das zwischen dem zweiten Bereich (11) und dem Kabel (2) eine Dichtung bildet, wobei das Dichtungsmaterial eine solche Scherfestigkeit hat, daß die Festigkeit gegen Herausziehen des Kabels (2) bei Umgebungstemperatur 2 bis 10 kg beträgt; und

(d) ein Dichtungsmaterial auf einer Außenoberfläche des ersten Bereiches (10).

2. Gegenstand (9) nach Anspruch 1, wobei die Scherfestigkeit derart ist, daß die Festigkeit gegen Herausziehen bei Umgebungstemperatur 2 bis 7 kg beträgt.

3. Gegenstand (9) nach Anspruch 1 oder 2, wobei das Dichtungsmaterial auf dem zweiten Bereich (11) einen Mastix aufweist.

4. Gegenstand (9) nach Anspruch 1, wobei der erste Bereich (10) wärmeschrumpfbar ist und der erste und der zweite Bereich (10, 11) eine Schrumpftemperatur von 100 °C oder weniger haben.

5. Gegenstand (9) nach einem der vorhergehenden Ansprüche, wobei der erste Bereich (10) einen Kleberüberzug zum Verbinden des ersten Bereiches mit dem Kanal (1) aufweist.

6. Gegenstand (9) nach Anspruch 5, wobei der Kleber eine Haftfestigkeit von wenigstens 5 kg pro 2,5 cm bei Umgebungstemperatur hat.

7. Gegenstand (9) nach Anspruch 5, wobei der Kleber ein Schmelzkleber ist und der erste Bereich wärmeschrumpfbar ist.

8. Gegenstand (9) nach einem der vorhergehenden Ansprüche, umfassend einen im wesentlichen rohrförmigen Gegenstand, von dem ein offenendiger Teil den ersten Bereich (10) und von dem ein anderer offenendiger Teil den zweiten Bereich (11) aufweisen, wobei ein Übergangsbereich des Gegenstandes biegsam ist, so daß der erste Bereich von innen nach außen umschlagbar ist.

9. Gegenstand (9) nach Anspruch 8, wobei der erste Bereich eine äußere Beschichtung aus einem Kleber und der zweite Bereich eine innere Beschichtung aus einem Dichtungsmaterial geringer Scherfestigkeit aufweisen.

10. Gegenstand (9) nach einem der vorhergehenden Ansprüche, der zusätzlich eine Einrichtung aufweist, die bei einer Axialbewegung des Kabels relativ zum Kanal in einer aus dem Kanal herausweisenden Richtung einem Umschlagen des zweiten Bereiches von innen nach außen Widerstand entgegensetzt.

11. Gegenstand (9), umfassend einen Kanal, ein Kabel und eine Kanaldichtung nach einem der vorhergehenden Ansprüche, wobei das Kabel durch die Kanaldichtung mit dem Kanal dicht verbunden ist.

12. Gegenstand (9) nach Anspruch 11, wobei die Kanaldichtung einen Druckzugangspunkt trägt.

13. Gegenstand (9) nach Anspruch 12, wobei der Druckzugangspunkt ein Ventil (12) ist.

14. Gegenstand (9) nach Anspruch 13, wobei das Kabel ein Lichtwellenleiterkabel ist.

15. Verfahren zum dichten Verbinden eines Kabels (2) mit einem Kanal (1) durch eine druckfeste Kanaldichtung (9) nach Anspruch 1, mit einem ersten hohlen Bereich (10), der mit dem Kanal (1) in Eingriff kommen kann, mit einem zweiten hohlen Bereich (11), der in Eingriff mit dem Kabel (2) schrumpfbar ist, und mit einer Einrichtung, die eine relative Axialbewegung zwischen dem Kabel (2) und dem Kanal (1) ermöglicht, wobei das Verfahren folgendes aufweist:

(a) Positionieren der Kanaldichtung (9) um das Kabel (2) herum, so daß das offene Ende des zweiten Bereiches (11), durch den das Kabel (2) verläuft, dem Kanal (1) zugewandt ist;

(b) Wärmeschrumpfen des zweiten Bereiches (11) in Eingriff mit dem Kabel (2);

(c) Umschlagen des ersten Bereiches (10) von innen nach außen zum Eingriff mit dem Kanal (1); und

(d) in Eingriff Bringen des ersten Bereiches (10) mit dem Kanal (1).

16. Verfahren nach Anspruch 15, wobei die Kanaldichtung (9) ein im wesentlichen rohrförmiger Gegenstand ist, von dem ein offenendiger Teil den ersten Bereich (10) und von dem ein anderer offenendiger Teil den zweiten Bereich (11) aufweisen, wobei ein Übergangsbereich des Gegenstandes biegsam ist, wobei das Verfahren zusätzlich folgendes aufweist: Umschlagen des ersten Bereiches (10) von innen nach außen, um seinen Eingriff mit dem Kanal zu ermöglichen.

17. Verfahren nach Anspruch 15, wobei der erste Bereich (10) einen Schmelzkleber zum Verbinden des ersten Bereiches mit dem Kanal (1) trägt und wobei der Schritt (c) auch die Aktivierung des Schmelzklebers bewirkt.

# Fig.1.

# Fig.2.
## PRIOR ART.

# Fig.3.

Fig. 4.

Fig. 5.

Fig. 6.